# EUROPEAN PATENT APPLICATION

(11) **EP 4 425 824 A1**
(43) Date of publication of application: **04.09.2024**
(21) Application number: 22886408.8
(22) Date of filing: 29.07.2022
(51) Int. Cl.: H04L 9/10, G06F 21/60, H04L 9/32

(54) **DATA STORAGE SYSTEM, MOBILE BODY, AND DATA STORAGE PROGRAM**

(30) Priority: 26.10.2021 JP 2021174822
(71) Applicant: DENSO CORPORATION, Kariya-city, Aichi-pref. 448-8661 (JP)
(72) Inventor: SAKAMOTO, Hayato, Kariya-city, Aichi-pref., 448-8661 (JP); XU, Xin, Kariya-city, Aichi-pref., 448-8661 (JP)
(74) Representative: Winter, Brandl - Partnerschaft mbB
(86) International application number: PCT/JP2022/029280
(87) International publication number: WO 2023/074072

(57) **Abstract**

A data storage system (10) encrypts data using an encryption key when transmitting the data from the in-vehicle ECU (14) to the backup server (16), and the backup server (16) decrypts the received encryption data using the encryption key. Since the in-vehicle ECU (14) stores the encryption key in an area to which access is restricted, that is so-called secure world (SW), data cannot be encrypted using the encryption key from outside the in-vehicle ECU (14). Therefore, the data received by the backup server (16) and decrypted using the encryption key is data properly transmitted from the in-vehicle ECU (14).

## Description

### TECHNICAL FIELD

The present disclosure relates to a data storage system, a mobile object, and a data storage program.

### CROSS REFERENCE TO RELATED APPLICATION

This application is based on and claims the benefits of priority of Japanese Patent Application No. 2021-174822 filed on October 26, 2021, the entire disclosure of which is incorporated herein by reference.

### BACKGROUND ART

In recent years, the importance of data acquired by a mobile object such as vehicles has been increasing. Therefore, there is a need for a device that can store data acquired by a mobile object such as a vehicle while ensuring reliability.

Patent Literature 1 describes a data storage device in which an in-vehicle ECU stores data acquired in a vehicle using a blockchain. In the data storage device described in Patent Literature 1, data is backed up to a backup server, and when an anomaly occurs in the data stored in the in-vehicle ECU, the data is restored using the backup data.

### PRIOR ART LITERATURES

### PATENT LITERATURE

Patent Literature 1: JP 2021-13122 A

### SUMMARY OF INVENTION

In the data storage device described in Patent Literature 1, it is not verified that the data transmitted to the backup server is not fraudulently transmitted. Therefore, the data storage device described in Patent Literature 1 cannot detect, for example, a case where the in-vehicle ECU is operated by a malicious third party and data is fraudulently transmitted to the backup server. Further, in Patent Literature 1, it is not possible to detect whether an in-vehicle ECU in a proper state has transmitted data or a backup server in a proper state has received data. Thus, it is required that the data to be transmitted to the backup server is not fraudulent data, and that the devices such as the data transmission device and the backup server are in a proper state.

In view of the above background, it is an object of the present disclosure to provide a data storage system, a mobile object, and a data storage program that can determine whether data to be backed up or a device that transmits or receives data is proper.

### MEANS FOR ACHIEVING OBJECT

In order to achieve the object described above, the present disclosure employs the following measures. The reference symbols in parentheses described in claims indicate correspondence to the concrete means described in the embodiment, and the concrete means is described as an example. Thus, the technical scope of the present disclosure is not necessarily limited thereto.

A data storage system according to an aspect of the present disclosure is a data storage system that stores data transmitted from an information processing device in a backup server. The information processing device includes an encryption unit that generates encryption data by encrypting the data using an encryption key stored in a storage area whose access is restricted; and a transmission unit that transmits the encryption data to the backup server. The backup server includes a decryption unit that decrypts the encryption data received from the information processing device using the encryption key.

According to this configuration, when the data is transmitted from the information processing device to the backup server, the data is encrypted using the encryption key, and the backup server decrypts the received encryption data using the encryption key. Since the information processing device stores the encryption key in the storage area to which access is restricted, the data cannot be encrypted using the encryption key from an external device disposed outside the information processing device. Therefore, the data received by the backup server and decrypted using the encryption key is data properly transmitted from the information processing device. On the other hand, data that cannot be decrypted using the encryption key even if it is received by the backup server is data that has been fraudulently transmitted from the information processing device or data that has not been transmitted from the information processing device. Further, the feature that the backup server can decrypt the data using the encryption key indicates that not only the information processing device but also the backup server is in a proper state. Therefore, this configuration can determine that the data to be backed up or the device that transmits or receives the data is proper.

A mobile object according to one aspect of the present disclosure includes the information processing device described above.

A data storage program according to one aspect of the present disclosure is a data storage program for storing data transmitted from an information processing device in a backup server. The data storage program provides to function a computer included in the information processing device as an encryption unit that generates an encryption data by encrypting the data using an encryption key stored in an area to which access is restricted; and a transmission unit that transmits the encryption data to the backup server. The data storage program provides to function a computer included in the backup server as a decryption unit that decrypts the encryption data received from the information processing device using the encryption key.

### EFFECTS OF INVENTION

According to the present disclosure, it can be determined that data to be backed up or a device that transmits or receives data is proper.

### BRIEF DESCRIPTION OF DRAWINGS

FIG. 1 is a functional block diagram showing the electric configuration of a data storage system according to an embodiment.
FIG. 2 is a flowchart showing the flow of data transmission process executed by the in-vehicle ECU according to the embodiment.
FIG. 3 is a flowchart showing the flow of reception data verification process executed by the backup server according to the embodiment.

### EMBODIMENTS FOR CARRYING OUT INVENTION

The following will describe embodiments of the present disclosure with reference to the drawings. The embodiments described below show an example of the present disclosure, and the present disclosure is not limited to the specific configuration described below. In an implementation of the present disclosure, a specific configuration according to the embodiments may be adopted as appropriate.

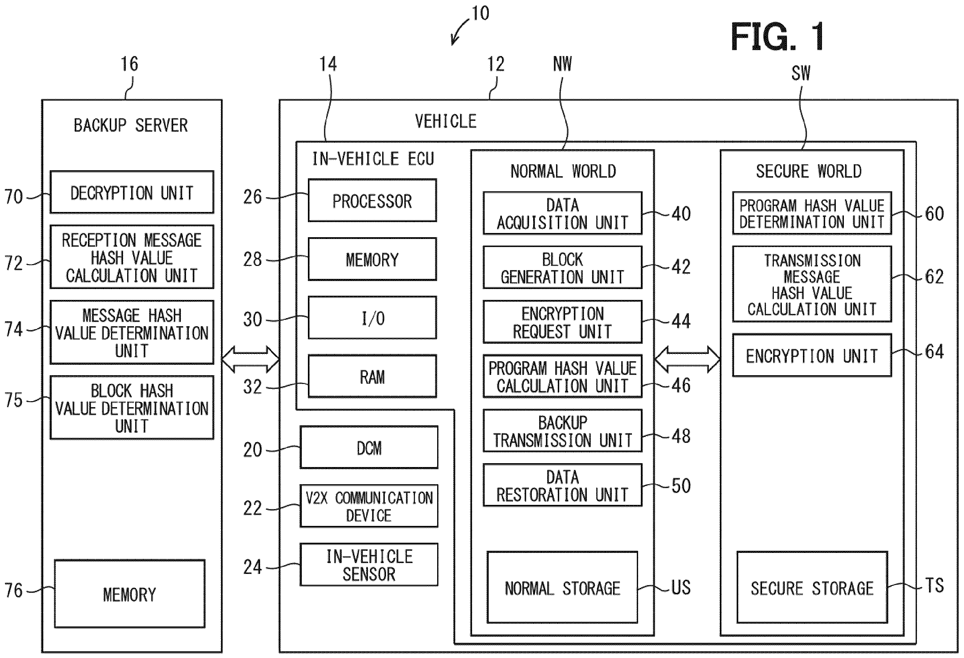

FIG. 1 is a functional block diagram showing the electric configuration of a data storage system 10 according to an embodiment. The data storage system 10 includes an in-vehicle ECU (i.e., Electronic Control Unit) 14 included in a vehicle 12 and a backup server 16.

The in-vehicle ECU 14 is one of a plurality of electronic control units mounted on the vehicle 12. The in-vehicle ECU 14 may be, for example, a body system integrated ECU, or an autonomous driving ECU for autonomous driving or advanced driving support. Furthermore, the in-vehicle ECU 14 may be a dedicated ECU for storing acquired data. The in-vehicle ECU 14 is directly or indirectly electrically connected to a DCM (i.e., Data Communication Module) 20, a V2X (i.e., Vehicle to Everything) communication device 22, a plurality of in-vehicle sensors 24, and the like.

The DCM 20 is a communication module that is mounted on the vehicle 12 and that transmits and receives data to and from an information processing device such as the backup server 16. For example, the DCM 20 transmits data stored in the in-vehicle ECU 14 to the backup server 16 for backup, and receives backup data from the backup server 16.

The V2X communication device 22 is an in-vehicle communication device that realizes vehicle-to-vehicle communication, road-to-vehicle communication, pedestrian-to-vehicle communication, and the like. When there exist an in-vehicle unit mounted on another vehicle, a road-side device arranged on a road, a portable terminal carried by a pedestrian, or the like within a communication range, the V2X communication device 30 can bidirectionally communicate with these communication configurations. The V2X communication device 22 transmits communication data acquired through communication to the in-vehicle ECU 14, for example, through a communication bus in an in-vehicle communication network.

The in-vehicle sensor 24 is configured to include multiple types of sensors mounted on the vehicle 12. The in-vehicle sensors 24 include a vehicle speed sensor and an inertial sensor that detect the running state of the vehicle 12, an in-vehicle camera that detects the driver's state and driving operation, a pedal sensor, and a steering sensor. The in-vehicle sensors 24 include a vehicle-outside camera, a millimeter-wave radar and a lidar for driving support or autonomous driving. Each in-vehicle sensor 24 transmits detected data to the in-vehicle ECU 14, for example, via a communication bus of an in-vehicle communication network.

The in-vehicle ECU 14 is an in-vehicle computer that has the function of a data storage device that acquires data generated in the vehicle 12 and stores the acquired data in a state that it is difficult to falsify the acquired data. The in-vehicle ECU 14 includes a control circuit including a processor 26, a memory 28, an input/output interface 30, a RAM (i.e., Random Access Memory) 32, and the like.

The processor 26 is hardware for operational processing, which is coupled to the RAM 32, and the processor 26 is capable of executing various types of programs with performing access processing to the RAM 32. The memory 28 includes a non-volatile storage medium and stores various types of programs to be executed by the processor 26. The memory 28 stores at least a data deletion program related to the accumulation, provision, and monitoring of data generated in the vehicle 12.

The in-vehicle ECU 14 defines at least two different processing areas within the system, i.e., a normal world NW and a secure world SW. The normal world NW and the secure world SW may either be physically separated from each other in hardware or be virtually separated from each other through cooperation of hardware and software. The in-vehicle ECU 14 temporally separates resources necessary for the execution of applications, in the normal world NW and the secure world SW, by utilizing the functions of context switches and the like.

The normal world NW is a normal area for executing operation systems and applications. The normal world NW is provided with a normal storage US, as a storage area (as Untrusted Storage) for storing data.

The Secure World SW is an area isolated from the Normal World NW. In the secure world SW, secure operation systems and applications for processing required to have security are executed. Access to the secure world SW from the normal world NW is restricted by a function of the processor 26. Therefore, the existence of the secure world SW cannot be recognized from the normal world NW, and the safety of the processing executed in the secure world SW and the information stored in the secure world SW is ensured. The secure world SW is provided with a secure storage TS, which is a storage area (as Trusted Storage) for storing data, and which cannot be directly accessed from the normal world NW and whose access is restricted. The capacity of the secure storage TS may be made smaller than the capacity of the normal storage US.

The in-vehicle ECU 14 of this embodiment stores the acquired data using a blockchain. Further, the in-vehicle ECU 14 of the present embodiment appropriately transmits the acquired data to the backup server 16 for backup and stores the acquired data.

Below, with reference to FIG. 1, a configuration related to data transmission to the backup server 16 in the in-vehicle ECU 14 will be described.

The normal world NW includes a data acquisition unit 40, a block generation unit 42, an encryption request unit 44, a program hash value calculation unit 46, a backup transmission unit 48, and a data restoration unit 50.

The data acquisition unit 40 is electrically connected to, for example, a communication bus of an in-vehicle communication network, and acquires various data generated in the vehicle 12, such as communication data and detection data, through the communication bus. The data acquisition unit 40 extracts preset data from the data sequentially output to the communication bus by the V2X communication device 22 and the in-vehicle sensor 24, selectively acquires it as acquired data of the storage target, and stores it in normal storage US.

The block generation unit 42 has the function of calculating a hash value, by using a hash function such as SHA-256, for example. Among the data acquired and stored by the data acquisition unit 40, the block generation unit 42 converts the data to be made into a blockchain into a hash chain data structure, and stores the data in the normal storage US as a secure data file. The block generation unit 42 generates a single block, based on a specified number of data or a specified capacity data. The specified number or the specified capacity has been preliminarily determined. The block generation unit 42 generates a blockchain formed by linearly connecting a large number of blocks by combining a hash value of data in one block (i.e., block hash value) with the next block. Here, in this embodiment, the data transmitted to the backup server 16 is, for example, blocks connected in a blockchain.

The encryption request unit 44 requests the encryption unit 64 in the secure world SW to encrypt the data acquired by the in-vehicle ECU 14 in order to transmit it to the backup server 16. Details of the encryption unit 64 will be described later. The data transmitted to the backup server 16 is, for example, blocks forming a blockchain, and the data transmitted to the backup server 16 is also referred to as a message in the following explanation. In addition, the encryption request unit 44 transmits the data, to be transmitted to the backup server 16, to the secure world SW, and requests the encryption unit 64 to encrypt this data at a predetermined timing such as a predetermined time, every time the data size acquired by the data acquisition unit 40 reaches a predetermined size, or every time the size of the blocks that have not been transmitted to the backup server 16 reaches a predetermined size, for example.

The program hash value calculation unit 46 calculates a program unique value that is a unique value of a program relating to an encryption of data (i.e., message) and transmission of the message to the backup server 16. Here, this unique value is, for example, a hash value, and in the following explanation, the unique value will be referred to as a calculated program hash value. The calculation program hash value is transmitted to the encryption unit 64 together with the message. Here, the program as a calculation target of the hash value is, for example, a program (i.e., an encryption request program) that functions as the encryption request unit 44. Here, as long as the program relates to an encryption of data and transmission of the date to the backup server 16, the program may not be limited to this program, and may be another program that functions as the backup transmission unit 48, for example.

The backup transmission unit 48 transmits data to be stored in the backup server 16 to the backup server 16 via the DCM 20.

The data restoration unit 50 restores data using backup data stored in the backup server 16 when there is an anomaly such as falsification or deletion in the blockchain.

The secure world SW includes a program hash value determination unit 60, a transmission message hash value calculation unit 62, and an encryption unit 64. Here, the secure storage TS included in the secure world SW stores a storage program hash value and an encryption key. The storage program hash value is a hash value of a program relating to an encryption of a message and transmission of the message to the backup server 16, which is an encryption request program in this embodiment, and is calculated in advance. The encryption key is a secret key for encrypting a message, and the same key is also stored in the backup server 16 and used for decryption. Since the storage program hash value and the encryption key are stored in the secure storage TS, they cannot be obtained from the normal world NW, so falsification is prevented.

In addition, in this embodiment, the same key (i.e., common key) is used for encryption and decryption as the encryption key as described above, alternatively, the feature may not be limited to this, and different keys (i.e., public key and secret key) may be used for encryption and decryption.

The program hash value determination unit 60 determines whether the calculation program hash value calculated by the program hash value calculation unit 46 matches the storage program hash value that has been calculated and stored in advance. If the calculation program hash value and the storage program hash value are different, the program hash value determination unit 60 determines that the encryption request program may have been falsified.

The transmission message hash value calculation unit 62 calculates a transmission message hash value, which is a hash value of the message received from the normal world NW to be transmitted to the backup server 16.

The encryption unit 64 encrypts the data transmitted from the normal world NW using the encryption key stored in the secure storage TS, and generates encryption data. The encryption data generated by the encryption unit 64 of this embodiment is obtained by encrypting the transmission message hash value calculated by the transmission message hash value calculation unit 62.

The encryption data serves as an electronic signature for the message to be transmitted to the backup server 16. Therefore, the encryption data is transmitted from the secure world SW to the normal world NW. The backup transmission unit 48 adds encryption data to the message as an electronic signature and transmits the message to the backup server 16.

The backup server 16 includes a decryption unit 70, a reception message hash value calculation unit 72, a message hash value determination unit 74, a block hash value determination unit 75, and a memory 76.

The decryption unit 70 decrypts the encryption data received from the in-vehicle ECU 14 using the encryption key. As described above, the encryption data of this embodiment is added as an electronic signature to a message transmitted from the in-vehicle ECU 14. The encryption key is stored in the memory 76.

The reception message hash value calculation unit 72 calculates a reception message hash value, which is a hash value of the message received from the in-vehicle ECU 14.

The message hash value determination unit 74 determines whether the transmission message hash value obtained by decrypting by the decryption unit 70 and the reception message hash value match. If the transmission message hash value and the reception message hash value are different, the message hash value determination unit 74 determines that the message (i.e., the data) transmitted to the backup server 16 is improper data.

The block hash value determination unit 75 determines whether the previous hash value of the top block included in the blocks received from the in-vehicle ECU 14 (hereinafter referred to as "previous block hash value") and the hash value of the final block stored in the backup server 16 (hereinafter referred to as "final block hash value") match.

The memory 76 is a large-capacity storage medium such as a hard disk drive, and stores data transmitted as a message from the in-vehicle ECU 14 for backup in association with ID information of the in-vehicle ECU 14, for example. Here, since the data to be transmitted from the in-vehicle ECU 14 for backup is the blocks connected in a blockchain, the memory 76 stores the data as a blockchain.

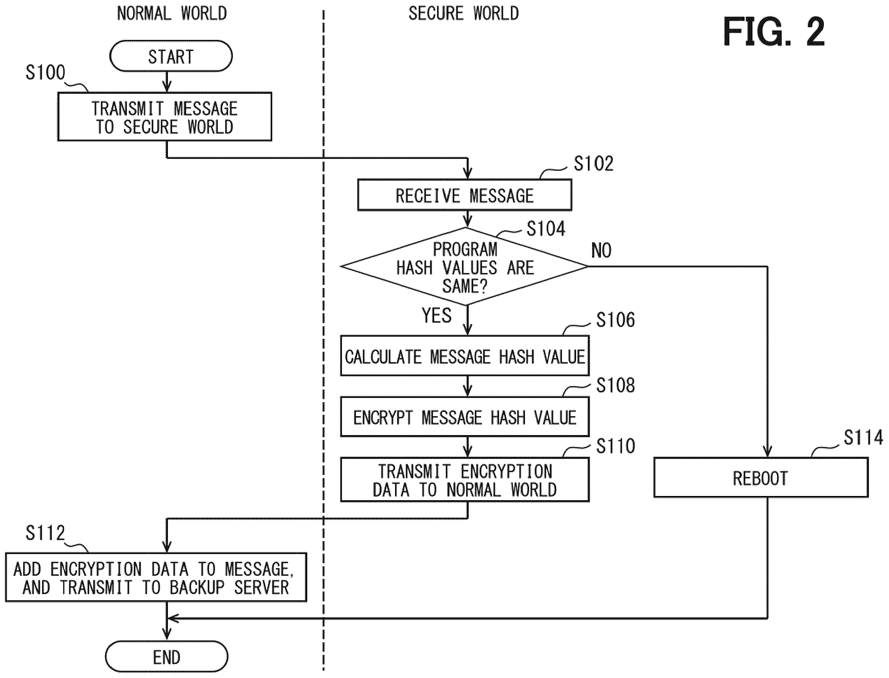

FIG. 2 is a flowchart showing the flow of data transmission processing executed by the in-vehicle ECU 14. As described above, the data transmission process starts at a predetermined timing such as a predetermined time, when the data size acquired by the data acquisition unit 40 reaches a predetermined size, or when the size of the blocks that have not been transmitted to the backup server 16 reaches a predetermined size. In the data transmission process of this embodiment, for example, when the size of the blocks that have not been transmitted reaches a predetermined size, the blocks are transmitted from the in-vehicle ECU 14 to the backup server 16. Here, the secure storage TS stores an encryption key and a storage program hash value in advance.

First, in step S100, the encryption request unit 44 transmits data to be sent to the backup server 16 as a message to the secure world SW. At this time, the encryption request unit 44 transmits the calculation program hash value calculated by the program hash value calculation unit 46 together with the message.

In the next step S102, the secure world SW receives the message and the calculation program hash value.

In the next step S104, the program hash value determination unit 60 determines whether or not the received calculation program hash value matches the stored storage program hash value, and in the case of a positive determination, the process proceeds to step S106, and when the determination is negative, the process proceeds to step S114.

In step S106, the transmission message hash value calculation unit 62 calculates the hash value of the received message.

In the next step S108, the encryption unit 64 encrypts the calculated message hash value using the encryption key to generate encryption data.

In the next step S110, the encryption data is transmitted to the normal world NW.

In this way, since the encryption unit 64 and the program hash value determination unit 60 execute processing in the secure world SW, it is possible to prevent the storage program hash value and the encryption key stored in the in-vehicle ECU 14 from being falsified.

In the next step S112, the backup transmission unit 48 adds the encryption data received from the secure world SW to the message as an electronic signature, and transmits the message to the backup server 16 to perform the data transmission process. In the data transmission process of this embodiment, the encryption data is added to the message as an electronic signature, so that the message itself can be transmitted to the backup server 16 in the same manner as a conventional way.

In step S114, which is proceeded to when a negative determination is made in step S104, since the program hash values do not match, it is determined that there is an unintended data transmission request due to the falsification of the encryption request program and the like, and the in-vehicle ECU 14 is rebooted, and then, it proceeds to secure boot. In the secure boot, the falsification or the like in the encryption request program is detected.

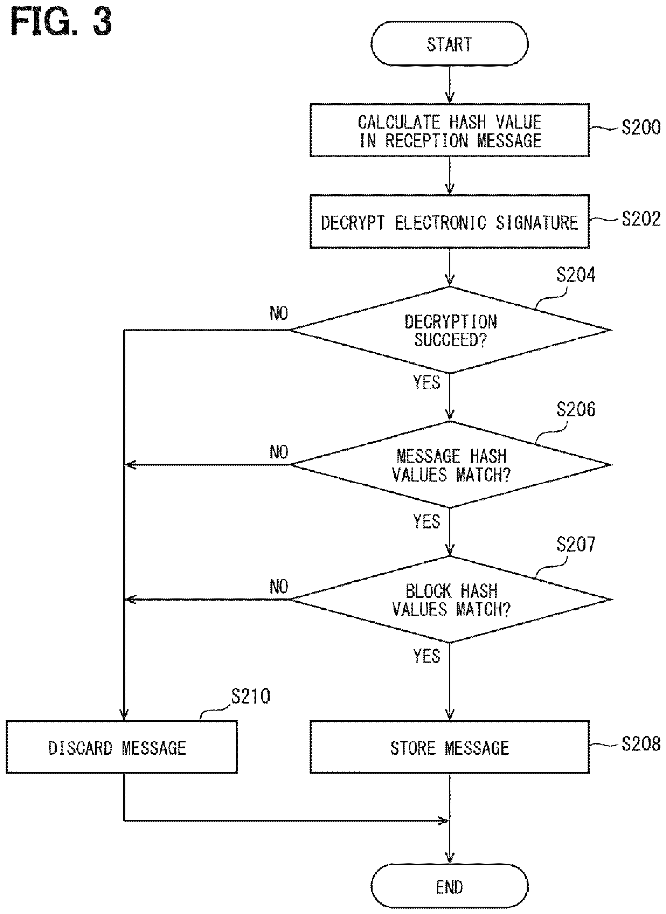

FIG. 3 is a flowchart showing the flow of reception data verification process executed by the backup server 16. The reception data verification process is executed when the backup server 16 receives a message transmitted from the in-vehicle ECU 14. Here, the encryption key is stored in advance in the memory 76 included in the backup server 16.

First, in step S200, the reception message hash value calculation unit 72 calculates a reception message hash value, which is a hash value of the received message.

In the next step S202, the decryption unit 70 decrypts the electronic signature added to the received message using the encryption key.

In the next step S204, the decryption unit 70 determines whether or not the decryption is successful. When the determination is positive, the process proceeds to step S206, and when the determination is negative, the process proceeds to step S210. When the determination is positive, the backup server 16 will acquire the transmission message hash value. On the other hand, when the determination is negative, the received message may have been fraudulently transmitted to the backup server 16, so it is discarded in step S210 without being stored in the memory 76.

In step S206, the message hash value determining unit 74 determines whether the transmission message hash value obtained by decryption and the reception message hash value calculated by the reception message hash value calculation unit 72 match, and when the determination is positive, the process proceeds to step S207. On the other hand, in the case of a negative determination, the received message may have been fraudulently transmitted to the backup server 16, so the process proceeds to step S210 and the received message is discarded without being stored in the memory 76.

In the next step S207, the block hash value determination unit 75 determines whether the previous block hash value included in the blocks received as a message matches the final block hash value stored in the backup server 16. In the case of a positive determination, the process proceeds to step S208. On the other hand, in the case of a negative determination, the received blocks may have been falsified, so the process proceeds to step S210, and the message is discarded without being stored in the memory 76. In this way, by checking the hash value before the backup server 16 stores the blocks, it is possible to detect whether or not the blocks have been falsified.

In step S208, the memory 76 stores the data that is the received message, and the reception data verification process ends. Here, since the data of this embodiment received as a message is the blocks, it is stored in the storage unit 76 by being connected to the last block of the blockchain already stored in the memory 76. Further, an electronic signature may also be stored in the memory 76 together with the message.

In this way, the data storage system 10 of this embodiment encrypts the data using the encryption key when transmitting data from the in-vehicle ECU 14 to the backup server 16, and the backup server 16 decrypts the received encryption data using the encryption key. Since the in-vehicle ECU 14 stores the encryption key in an area to which access is restricted, that is so-called secure world SW, data cannot be encrypted using the encryption key from outside the in-vehicle ECU 14. Therefore, the data received by the backup server 16 and decrypted using the encryption key is data properly transmitted from the in-vehicle ECU 14. On the other hand, data that cannot be decrypted using the encryption key even if it is received by the backup server 16 is data that has been fraudulently transmitted from the in-vehicle ECU 14 or data that has not been transmitted from the in-vehicle ECU 14. Further, the feature that the backup server 16 can decrypt the data using the encryption key indicates that not only the in-vehicle ECU 14 but also the backup server 16 is in a proper state. Therefore, the data storage system 10 of this embodiment can determine that the data to be backed up or the device that transmits or receives the data is proper.

In addition, the data storage system 10 of the present embodiment double verifies the data received by the backup server 16 from the in-vehicle ECU 14 by the determination of both the encryption and the hash value, so that it is possible to reliably determine whether the data transmitted to the backup server 16 has been properly transmitted.

Although the present disclosure is described with the embodiment and modifications as described above, the technical scope of the present disclosure is not limited to the scope described in the embodiment and modifications described above. Various changes or improvements can be made to the above embodiment and modifications without departing from the spirit of the present disclosure, and other modifications or improvements are also included in the technical scope of the present disclosure.

The data storage system 10 of the above embodiment encrypts the transmission message hash value, which is a hashed message, adds it to the message as an electronic signature, and transmits the message to the backup server 16. Alternatively, the present feature may not be limited to this. As long as the encrypted transmission message hash value and the encrypted message are associated with each other and transmitted to the backup server 16, the message may be transmitted in a form other than an electronic signature.

The data storage system 10 of the above embodiment may be configured to encrypt the message without hashing it and transmit the encrypted message to the backup server 16. In this case, since a message hash value is not calculated, the backup server 16 determines whether data transmission is proper depending on whether the data can be decrypted using the encryption key.

The hash function used in the data storage system 10 of the above embodiment is a cryptographic hash function. Such a cryptographic hash function has characteristics such that the cryptographic hash function does not output the same hash value in response to different inputs, and it is substantially impossible to estimate the input from a hash value output from the function. Instead of the above-mentioned SHA-256, which is one of the SHA-2 algorithms, SHA-1, SHA-2, and SHA-3 algorithms may be used as appropriate depending on the required output length (i.e, the number of bits). Alternatively, an irreversible value that is a unique value of data or a program may be used instead of a hash value.

The vehicle 12 with mounting the in-vehicle ECU 14 thereon may be owned by an individual person who is a certain owner, and is an owner car expected to be used by the owner or the like. By applying the present feature to such an owner car, data indicating user's driving history, which is accumulated in a state of being protected from impersonation, is highly valuable for service providers who determine insurance fees according to driving conditions, for example.

The vehicle 12 with mounting the in-vehicle ECU 14 thereon may be also a vehicle as a rental car, a vehicle as a manned taxi, a vehicle for ride sharing, a freight vehicle, a bus, or the like. The in-vehicle ECU 14 may be also mounted on a driver-less vehicle for use in mobility services. As mobility services expand in the future, it is assumed that the importance of data accumulated in the in-vehicle ECU 14 will be increased.

In the aforementioned embodiments, the respective functions provided by the in-vehicle ECU 14 can be also provided by software and hardware for executing the software, only software, only hardware, and complex combinations of software and hardware. In cases where these functions are provided by electronic circuits as hardware, the functions can be also provided by analog circuits or digital circuits, which include a large number of logic circuits.

In the foregoing embodiments, each processor may include at least one operational core, such as a central processing unit (CPU) or a graphics processing unit (GPU). The processor may further include a field-programmable gate array (FPGA) and an IP core having other dedicated functions.

The feature of the storage medium that stores each program related to the data transmission process and the reception data verification process of the above embodiment may be changed as appropriate. For example, the storage medium is not limited to the configuration provided on the circuit board, and may be provided in the form of a memory card or the like. The storage medium may be inserted into a slot, and electrically connected to a bus of computer. The storage medium may include an optical disk which forms a source of programs to be copied into a computer, a hard disk drive therefor, and the like.

The control unit and the method thereof described in the present embodiments may be implemented by a dedicated computer constituting a processor programmed to execute one or multiple functions embodied by a computer program. Alternatively, the device and the method thereof described in the present embodiments may also be implemented by a dedicated hardware logic circuit. Alternatively, the device and the method thereof described in the present embodiments may be implemented by one or more dedicated computers configured by a combination of a processor executing a computer program and one or more hardware logic circuits. Furthermore, the computer program may be stored in a computer-readable non-transition tangible recording medium as an instruction executed by a computer.

Furthermore, an ECU equipped with a data transmission processing function can be mounted on a mobile object other than a vehicle. For example, such an ECU having the functions of a data transmission process can be mounted on a heavy machine for use in workplaces, driving play equipment placed in an amusement facility or the like, a railway vehicle, a tram, an airplane, or the like.

Further, the process flow described in the above embodiment is only an example, and unnecessary steps may be deleted, new steps may be added, or the processing order may be changed without departing from the scope of the present disclosure.

## Claims

1. A data storage system (10) comprising:
an information processing device (14) for transmitting data; and
a backup server (16) for storing the data transmitted from the information processing device, wherein:
the information processing device includes:
an encryption unit (64) that generates encryption data by encrypting the data using an encryption key stored in a storage area (TS) whose access is restricted; and
a transmission unit (48) that transmits the encryption data to the backup server; and
the backup server includes:
a decryption unit (70) that decrypts the encryption data received from the information processing device using the encryption key.

2. The data storage system according to claim 1, wherein:
the information processing device further includes:
a first data unique value calculation unit (62) that calculates a first data unique value that is an unique value of the data to be transmitted to the backup server;
the encryption unit encrypts the first data unique value using the encryption key to obtain the encryption data;
the transmission unit adds the encryption data to the data and transmits to the backup server; and
the backup server further includes:
a second data unique value calculation unit (72) that calculates a second data unique value that is an unique value of the data received from the information processing device; and
a data unique value determination unit (74) that determines whether the first data unique value obtained by decrypting by the decryption unit matches the second data unique value.

3. The data storage system according to claim 2, wherein:
the encryption data is added as an electronic signature to the data to be transmitted to the backup server.

4. The data storage system according to any one of claims 1 to 3, wherein:
the information processing device further includes:
a program unique value calculation unit that calculates a first program unique value that is a unique value of a program relating to an encryption of the data and transmission of the date to the backup server; and
a program unique value determination unit that determines whether the first program unique value calculated by the program unique value calculation unit matches a second program unique value that is an unique value of the program and is calculated and stored in advance.

5. The data storage system according to claim 4, wherein:
the encryption unit and the program unique value determination unit execute processing in an area to which access is restricted.

6. The data storage system according to any one of claims 1 to 5, wherein:
the data is blocks connected in a blockchain; and
the backup server further includes: a block unique value determination unit that determines whether a previous unique value of a top block in the blocks received from the information processing device matches an unique value of a final block stored in the backup server.

7. A mobile object (12) comprising the information processing device according to any one of claims 1 to 5.

8. A data storage program for storing data transmitted from an information processing device to a backup server,
the data storage program causing a computer included in the information processing device to function as:
an encryption unit that generates an encryption data by encrypting the data using an encryption key stored in an area to which access is restricted; and
a transmission unit that transmits the encryption data to the backup server; and
the data storage program causing a computer included in the backup server to function as:
a decryption unit that decrypts the encryption data received from the information processing device using the encryption key.
